# EUROPEAN PATENT APPLICATION

(11) **EP 4 641 948 A1**
(43) Date of publication of application: **29.10.2025**
(21) Application number: 24305642.1
(22) Date of filing: 25.04.2024
(51) Int. Cl.: H04B 10/112, H04B 10/114, H04B 10/61, H04B 10/079

(54) **OPTICAL RECEIVER FOR FREE SPACE OPTICAL COMMUNICATION**

(71) Applicant: Nokia Solutions and Networks Oy, 02610 Espoo (FI)
(72) Inventor: DUTISSEUIL, Eric, 91790 Boissy-Sous-Saint-Yon (FR); BIGO, Sébastien, 91300 Massy (FR); BODDEDA, Rajiv, 91300 Massy (FR)
(74) Representative: Novagraaf Technologies

(57) **Abstract**

An apparatus comprises processing circuitry configured to: provide values of one or more parameters for controlling an optical receiver; perform real-time adaptation of the values of the one or more parameters; monitor a quality metric associated with an optical signal received by the optical receiver via a free-space optical link; in response to a value of the quality metric falling below a first threshold, preserve the values of the one or more parameters; and in response to the value of the quality metric rising above a second threshold, restart or continue with the real-time adaptation of the values of the one or more parameters using the preserved values

## Description

### TECHNICAL FIELD

Various example embodiments relate generally to an apparatus comprising processing circuitry connected or connectable to, or integrated in, an optical receiver adapted for free space optical communication and a corresponding method for controlling an optical receiver.

### BACKGROUND

Optical communications via free space provide high-capacity and highspeed data links.

Free-space optical links relate to links that do not use an optical waveguide (such as an optical fiber). Free space optical links include links through space and/or through the Earth's atmosphere for example, e.g., between Earth and satellites.

Free space optical transmissions may face psec to msec interruptions (e.g., fading event) due to atmospheric turbulence. Air turbulence randomly modifies (spatially and temporally) the optical beam profile and may cause spatio-temporal phase and/or amplitude variations of the optical beam.

These fading events may lead to interruptions in information transmitted. Due to atmospheric turbulence, the received power intermittently may go below the decoding capabilities of the optical receiver. Despite the use of several correction functions (e.g., FEC) and optimization of the decoding functions chain in the optical receiver, the fading events may result in output signal errors, time to recover from a signal interruption, or, in worse cases, complete outages at the optical receiver's end.

### SUMMARY

The scope of protection is set out by the independent claims. The embodiments, examples, and features, if any, described in this specification that do not fall under the scope of the protection are to be interpreted as examples useful for understanding the various embodiments or examples that fall under the scope of protection.

According to a first aspect, an apparatus comprises processing circuitry configured to: provide values of one or more parameters for controlling an optical receiver; perform real-time adaptation of the values of the one or more parameters; monitor a quality metric associated with an optical signal received by the optical receiver via a free-space optical link; in response to a value of the quality metric falling below a first threshold, preserve the values of the one or more parameters; and in response to the value of the quality metric rising above a second threshold, restart or continue with the real-time adaptation of the values of the one or more parameters using the preserved values.

The processing circuitry may be configured to pause the real-time adaptation of the values of the one or more parameters in response to the value of the quality metric falling below the first threshold. Pausing the real-time adaptation provides a simple way of preserving the values of the one or more parameters. It can further result in power savings.

The second threshold may be the same as or is higher than or lower than the first threshold.

The processing circuitry may be configured to reset the values of the one or more parameters to predefined values when the value of the quality metric has remained below the second threshold over a predetermined period.

The predetermined period may be less than 3 ms, or less than 10 ms, or less than 30 ms, or less than 100 ms.

The apparatus may comprise the optical receiver.

The optical receiver may comprise one or more photodetectors, one or more analog-to-digital converters, and a decoder.

The one or more photodetectors may be configured to generate one or more electrical signals in response to the optical signal.

The one or more analog-to-digital converters may be configured to generate one or more digital streams of samples from the one or more electrical signals.

The decoder may be configured to generate one or more streams of data units by decoding the one or more digital streams of samples.

The one or more parameters may comprise one or more parameters of the decoder.

The quality metric may be a function of one or more of the following: a signal-to-noise ratio of the optical signal; and inter-sample correlations of one or more digital streams of samples generated by one or more analog-to-digital converters of the optical receiver. The inter-sample correlations may comprise correlations between two or more consecutive samples.

The decoder may comprise a filter, and wherein the one or more parameters comprise coefficients of the filter. The filter may be one of a Constant Modulus Algorithm filter or a Frequency and Carrier Correction filter or a post-equalizer.

The one or more digital streams of samples comprise a first, a second, a third and a fourth digital stream of samples, the first, the second, the third and the fourth digital stream of samples representing an in-phase component and a quadrature component of a first and a second polarization component of the optical signal, respectively.

According to a second a method comprises: providing values of one or more parameters for controlling an optical receiver; performing real-time adaptation of the values of the one or more parameters; monitoring a quality metric associated with an optical signal received by the optical receiver via a free-space optical link; in response to a value of the quality metric falling below a first threshold, preserving the values of the one or more parameters; and in response to the value of the quality metric rising above a second threshold, restarting or continuing with the real-time adaptation of the values of the one or more parameters using the preserved values.

According to another aspect, an apparatus comprises means for performing one or more or all steps of the method according to the second aspect. The means may include at least one processor and at least one memory storing instructions that, when executed by the at least one processor, cause the apparatus to perform one or more or all steps of a method according to the first aspect. The means may include circuitry (e.g., processing circuitry) to perform one or more or all steps of a method according to the first aspect.

As used herein, the phrase "values of one or more parameters" or "the value of the one or more parameters" means "a value of a parameter" or "the value of the parameter", respectively, if there is only one parameter.

### BRIEF DESCRIPTION OF THE DRAWINGS

Example embodiments will become more fully understood from the detailed description given herein below and the accompanying drawings, which are given by way of illustration only and thus are not limiting of this disclosure.
FIG. 1 shows an optical receiver according to an example.
FIG. 2 illustrates principles of a quality metric determination according to an example.
FIG. 3 shows a functional diagram of a noise detector according to an example.
FIG. 4 shows variations over time of several signals according to an example.
FIG. 5 shows an example circuitry adapted to perform one or more corrective actions based on a quality metric and/or trigger signal.
FIGS. 6 and 7 show an example auto-adaptive filter using a trigger signal to adapt the filter weights.
FIG. 8 shows curves as a function of time that illustrate the weight update logic for the example auto-adaptive filter described by reference to FIGS. 6 and 7.
FIG. 9 is a flowchart illustrating a method according to an example.

It should be noted that these drawings are intended to illustrate various aspects of devices, methods and structures used in example embodiments described herein. The use of similar or identical reference numbers in the various drawings is intended to indicate the presence of a similar or identical element or feature.

### DETAILED DESCRIPTION

Detailed example embodiments are disclosed herein. However, specific structural and/or functional details disclosed herein are merely representative for purposes of describing example embodiments and providing a clear understanding of the underlying principles. However, these example embodiments may be practiced without these specific details. These example embodiments may be embodied in many alternate forms, with various modifications, and should not be construed as limited to only the embodiments set forth herein. In addition, the figures and descriptions may have been simplified to illustrate elements and/or aspects that are relevant for a clear understanding of the present invention, while eliminating, for purposes of clarity, many other elements that may be well-known in the art or not relevant for the understanding of the invention.

Embodiments relate to an apparatus and an optical receiver for generating at least one decoded stream of data units from an input optical signal transmitted via a free space optical link. Ideally, the decoded stream of data units will be an exact replica of an original stream of data units encoded by an optical transmitter.

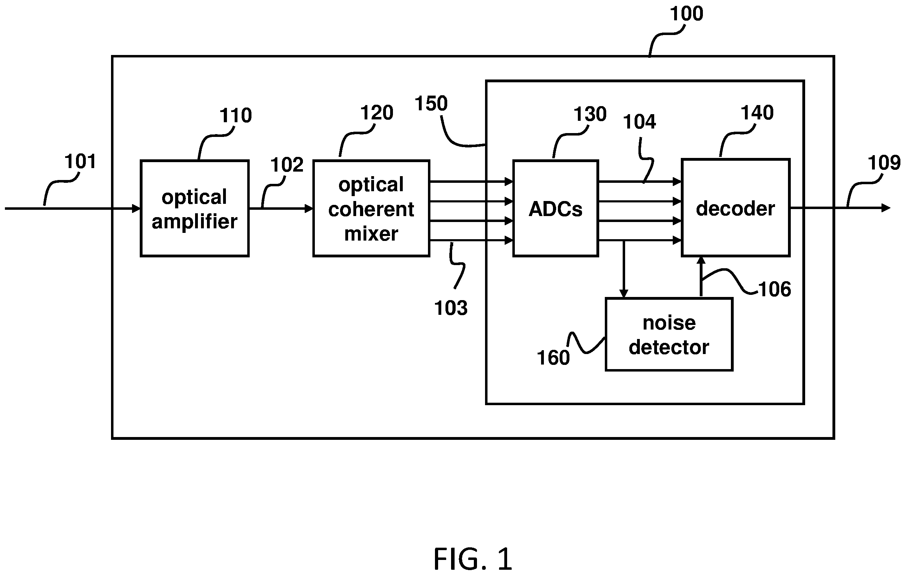

FIG. 1 shows an example of optical receiver 100 adapted for free space optical communication according to a simplified example.

The optical receiver 100 is adapted for generating a decoded stream of data units from an input optical signal transmitted via a free space optical link.

For coherent optical transmission, the optical receiver is configured to receive an input optical signal 101 transmitted via a free space and to generate one or more decoded streams 109 of data units. The input optical signal is modulated using a modulation scheme such as, for example, QAM (quadrature-amplitude modulation) or PSK (phase-shift keying). Any other modulation scheme may be used.

The input optical signal 101 may correspond to a complex signal with dual polarization. The input optical signal 101 may encode one or more streams of data units, encoded by an optical transmitter.

The communication system may be adapted for transmitting data units according to standard protocols such as Ethernet, IP or OTN. Hence the transmitted data units may be PDUs (Packet Data Units). The transmitted PDUs may be one of the following: Ethernet frames; Optical Transport Network (OTN) packets; Internet Protocol (IP) packets. The PDUs may be data units at a layer above the physical layer in the OSI model.

The optical receiver 100 may include, as illustrated by FIG. 1:
- an optical amplifier 110, adapted for amplifying the input optical signal 101 and generating an amplified optical signal 102;
- an optical coherent mixer 120, including one or more photodetectors (e.g., photodiodes), adapted for detecting the amplified optical signal 102 and converting the amplified optical signal 102 to one or more analog electrical signals, collectively designated by reference 103;
- Analogue-to-Digital Converters (ADCs) 130 adapted for sampling the one or more analog electrical signals 103 to generate respectively one or more digital streams of samples, collectively designated by reference 104;
- a DSP (Digital Signal Processing) 140, hereafter the decoder, adapted for decoding the digital streams of samples to generate one or more decoded streams of data units, collectively designated by reference 109.

The one or more digital streams of samples may comprise four digital stream of samples: a first, a second, a third and a fourth digital stream of samples. The first, the second, the third and the fourth digital stream of samples representing an in-phase component and a quadrature component of a first and a second polarization component of the optical signal, respectively. There may be one ADC per analog electrical signal and digital stream.

The decoder of the optical receiver is configured to generate the decoded stream of data units from the one or more digital streams of samples by applying a plurality of signal processing functions. The plurality of signal processing functions may include for example: a CMA (Constant Modulus Algorithm) filter, a carrier frequency and phase offset estimation and correction (CFE / CPE) function, a forward error correction (FEC) function, a post equalizer, etc.

The decoder may be part of processing circuitry 150 connected to an optical coherent mixer 120 or integrated into an optical receiver 100. The processing circuitry 150 may be implemented using an ASIC or a standard off the shelf FPGA modules with an integrated memory, etc. Such an ASIC (Application-Specific Integrated Circuit) may implement the signal processing function of the decoder using logical elements.

The decoder is configured, e.g., with the plurality of signal processing functions, to provide values of one or more parameters for controlling the optical receiver and to perform real-time adaptation of the values of the one or more parameters. As an example, the CMA filter is an adaptative filter that is configured to provide values of weights of the CMA filter and perform real time adaptation of these values. As another example, the CFE / CPE function is configured to provide values of phase rotation speed and phase offset, respectively, and to perform real-time corrections of the symbols..

"Real time" may refers to the processing of data with little to no delay, typically as soon as the optical signal is received. In the present context, real-time adaptation implies that the optical receiver is able to adapt itself "on the fly" to the optical signal.

It cannot be guaranteed that the decoder of the optical receiver remains functional during and even after a fading event. The front-end blind and iterative adaptive filters used in conventional decoder, devised for fading-free fiber transmissions, can drift away during a fading event to corrupted or even blocked states. In this case, a reset of the decoder may be needed, leading to a longer traffic interruption.

Corrective actions on the decoder can be proposed to maintain the stability of the decoder during fading or to retrieve its operating state after the received signal resumes. However, these solutions require a prior fast detection of the start and end of these fading events causing noise.

Embodiments disclosed herein aim to eliminate or drastically reduce the time for the decoder to recover after a fading event.

Embodiments allow for real time monitoring of a quality metric associated with the received optical signal. The quality metric is a function that depends on, or correlates with, the received optical signal and which provides a measure of how well the optical signal is received, or how well the received optical signal can be decoded. The quality metric may, for example, depend on or correlate with one or more of the following: power of the received optical signal; a signal-to-noise ratio (SNR) of the received optical signal; and inter-sample correlations of one or more digital streams of samples obtained from the received optical signal. A drop of the value of the quality metric can indicate the beginning of a fading event. Rapid detection of the fading event allows the optical receiver to adapt itself in various manners, especially to mitigate the impact of the fading event(s) on the decoder and/or the decoded stream(s). The optical receiver can thus become more tolerant to atmospheric turbulence for free-space transmission, especially in Earth-to-satellite optical communications.

Coherent optical receivers may use an optical amplifier 110 before the signal reception that is configured to operate in constant output power by automatic gain adjustment or simple gain saturation. During a fading event caused by atmospheric turbulence, the optical power at the input of the optical amplifier 110 deeply drops and the optical amplifier 110 increases its gain to compensate for the power drop. As a result, the amplifier noise increases and can become largely predominant over the signal, up to substituting the signal completely. This means that a fading event results in additional noise at the output of the optical amplifier 110. This high noise level may be one of the causes of the decoder corruption in existing optical receivers.

To be able to mitigate the effects of fading events on the control of the decoder, a quality metric associated with the optical signal transmitted via free space and received by the optical receiver is monitored. The quality metric may be monitored in real time to allow the optical receiver to perform one or more correction actions in real time.

The quality metric may be monitored for example from the amplified optical signal 102, the input optical signal 101, the one or more electrical signals 103 generated by the photodetectors or the one or more digital streams 109 of samples at the output of the ADCs.

Each value of the quality metric may be generated for a time window, i.e., for a corresponding temporal portion of the optical signal.

The quality metric may, for example, be a function of a signal-to-noise ratio (SNR) of the optical signal, or a function of an SNR of electrical signals generated by e.g., one or more photodetectors in response to the optical signal. Alternatively, the quality metric may be computed as a function of correlations between successive samples of each of the one or more digital streams of samples at the output of the ADCs.

Corrective actions may be taken on the basis of the quality metric in order to allow the decoder to recover quickly after noise has been detected on the basis of the quality metric.

An objective of the corrective action may be to adapt, during the fading event, one or more of the signal processing functions performed by the decoder to allow the decoder to return to its functional state before the fading event.

In response to a value of the quality metric falling below a first threshold (this may correspond to a start of fading event), at least one first action may be performed. The first action may include preserving (e.g., memorizing) the values of the one or more parameters that are adapted in real time. Preserving the values may be performed by memorizing the values or by freezing the values in memory, i.e., by keeping the values present in memory unchanged or unaffected by the adaptation for example by using a zero update amount for the values, etc). Alternatively or in combination, the first action may include pausing (e.g., interrupting, freezing, etc) the real-time adaptation of the values of the one or more parameters in response to the value of the quality metric falling below the first threshold. Pausing the real-time adaptation provides a simple way of preserving the values of the one or more parameters. It can further result in power savings.

In response to a value of the quality metric rising above a second threshold (this may correspond to the end of fading event), at least one second action may be performed. The second action may be to restart or continue with the real time adaptation of the values of the one or more parameters using the preserved (e.g., memorized, frozen or unchanged) values. Here "using the preserved (e.g., memorized, frozen or unchanged) values" may mean taking the preserved (e.g., memorized, frozen or unchanged) values as initial values of the parameters when the real-time adaptation is resumed. The values of the one or more parameters are thus conserved over a period in which the quality metric is below the second threshold, e.g., during a period of low power or low SNR of the optical signal. Without conserving the values, the values might vary strongly, to such an extent that they may become useless for receiving and decoding the optical signal when the quality metric has risen above the second threshold.

An additional corrective action may be to reset the values of the one or more parameters to predefined values when the value of the quality metric has remained below the second threshold over a predetermined period. The predetermined period may be less than 3 ms, or less than 10 ms, or less than 30 ms, or less than 100 ms.

The quality metric may be monitored, for example, by a noise detector 160. The output 106 of the noise detector may be a signal-to-noise ratio (SNR), for example, and/or a trigger signal (e.g., a binary signal). In an embodiment, the quality metric is provided by the output of the noise detector (note that the quality metric may be a binary quality metric, i.e. a quality metric having only two possible values). In another embodiment, the quality metric is a function of the output 106 of the noise detector and one or more further parameters or signals, e.g. inter-sample correlations. The trigger signal may for example be adapted for triggering at least one first action when the quality metric falls below a first threshold and at least one second action when the quality metric rises above a second threshold.

The first and second thresholds may be adjusted in various manner depending on the quality metric used. The second threshold may be the same as the first threshold or may be higher or lower than the first threshold.

The noise detector 160 may be implemented in addition and in parallel to the decoder. The noise detector 160 and the decoder 140 may be integrated in a same processing circuit 150 (e.g., an ASIC, a FPGA, etc).

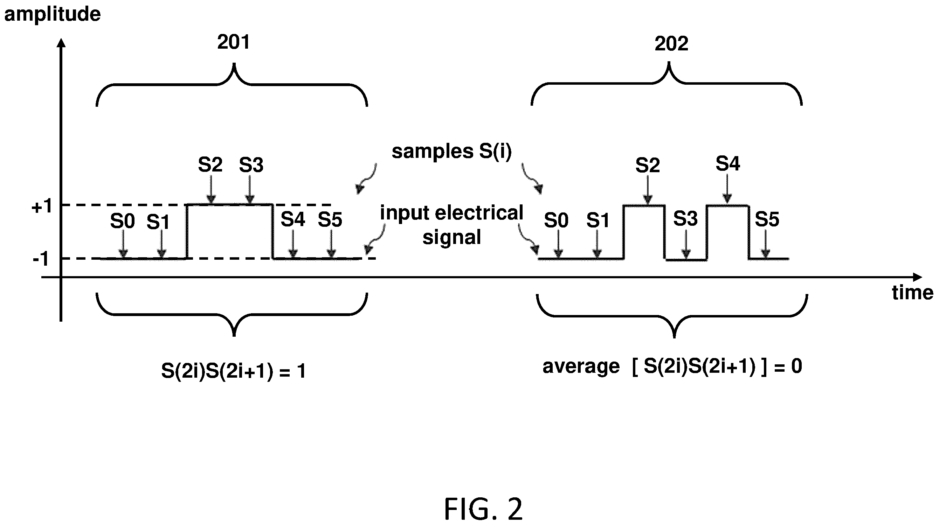

The embodiment of FIG. 1 may be combined with any other embodiment disclosed below for example by reference to FIGS. 2 to 8.

FIG. 2 illustrates principles of a noise detector adapted for fading event detection based on a simplified example using one or more digital streams of samples at the output of the ADCs.

This example embodiment leverages the use of the sampling rate applied by the ADCs 130, that may be equal to N times (e.g., N>=2, due to Nyquist theorem) the signal baud rate (i.e., rate of the modulation symbols) of the optical signal. The same sampling rate may be applied to each analog signal to be sampled by the ADCs 130.

The left part of FIG. 2 shows an unaffected temporal portion 201 of a stream of samples, while the right part of FIG. 2 shows a noisy temporal portion 202 of a stream of samples corresponding to a temporal portion of the input optical signal impaired by a fading event.

The quality metric may be generated over a time window based on a set of values of an inter-sample correlation indicator. Values of inter-sample correlation indicator are also referred to herein as inter-sample correlations. An inter-sample correlation indicator may be generated from N (e.g., N>=2) successive samples in a stream of samples 104 at the output of an ADC 130. In particular, a value of the inter-sample correlation indicator may be generated per transmitted modulation symbol used in the modulated optical input signal.

Such inter-sample correlation indicators allows to distinguish, based on one or more streams of samples at the output of the ADCs 130, a temporal portion of the input optical signal 101 that corresponds to the transmitted signal from a temporal portion of the input optical signal 101 that corresponds to optical noise due to one or more fading events, and therefore to distinguish a noisy signal impaired by a fading event from an unaffected signal upstream of the optical receiver.

A value of the inter-sample correlation indicator may be computed in real time between all N (e.g., N>=2) consecutive samples, such that the consecutive samples correspond to a same transmitted symbol. As shown in the simplified example of FIG. 2 in which N=2, with a simplified representation of symbol amplitude being either -1 or +1, all samples of index (2*i) and index (2*i+1) of the temporal portion 201 are correlated such that the product S(2i)S(2i+1) of N=2 consecutive samples is equal to 1, unlike the temporal portion 202 in case of noise where the product S(2i)S(2i+1) of N=2 consecutive samples is equal to 0 in average.

Given that the modulated optical signal is a complex signal corresponding to successive symbols defined by the modulation scheme, the real part and/or the imaginary part of the modulated optical signal may be used for computing a value of the inter-sample correlation indicator for a given transmitted symbol.

As an example, assuming that the sampling rate by the ADCs is N (e.g., N>=2) times the baud rate of the transmitted modulation symbols in the optical signal 101, then an inter-sample correlations may be generated for one or more transmitted symbol(s) S based on
- N samples generated from the real part of the symbol(s) S; or
- N samples generated from the imaginary part of the symbol(s) S.

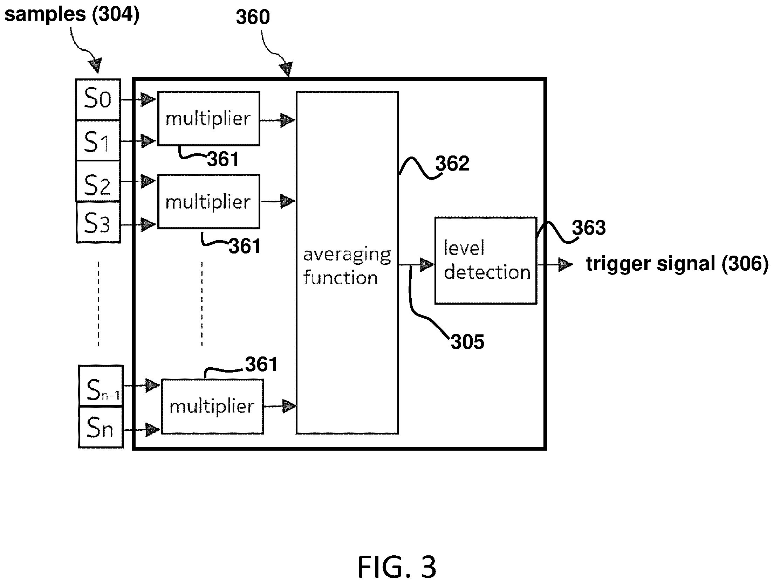

FIG. 3 shows an example noise detector 360 adapted to generate a quality metric and/or trigger signal 306 to control the real time adaptation of parameter(s) according to a simplified example.

The noise detector 360 is fed by one or more streams of samples 304 generated by the ADCs. Due to the relatively low operating frequency that can be used in an ASIC, the streams of samples 304 may be provided in the form of an n-sized array of consecutive samples and the decoder is implemented in parallel to operate these samples.

A multiplier 361 is applied to each pair of consecutive sample values 304 to generate an inter-sample correlation indicator value. Values of the inter-sample correlation indicator are averaged (e.g., by an averaging function 362) over a time window (corresponding in this example to the n-size array) to generate an averaged correlation signal 305. The noise detector 360 may get the sample values in real time in the form of a periodic n-sized array and implements a correlation function between these sample values. The time window may for example correspond to a number of successive samples equal to n=20, 32, 64, etc. The number of successive samples taken into account determines the reactivity and speed with which the optical receiver is able to adapt itself in real time to a fading event.

Each value of the averaged correlation signal 305 may be compared (e.g., by a level detection function 363) to a threshold to generate a binary value, the successive binary values forming a trigger signal 306. The comparison of the averaged correlation signal 305 with a threshold allows to discriminate non-zero values from zero values, which realizes the noise detection.

In embodiments, two distinct thresholds may be used. A first threshold may be used to detect that the quality metric falls below the first threshold and trigger a first action, e.g., memorize the values of the one or more parameters that are adapted in real time. A second threshold may be used to detect that the quality metric rise above the second threshold and trigger a second action, e.g., to restart or continue with the real time adaptation of the values of the one or more parameters using the preserved (e.g., memorized, frozen or unchanged) values.

The output of the noise detector may be the quality metric itself and/or a trigger signal 306 (e.g., a binary signal) adapted for triggering at least one first action when the quality metric falls below a first threshold and at least one second action when the quality metric rise above a second threshold.

The trigger signal may be indicative of the presence or absence of noise in the received optical signal, e.g., noise due to a fading event. This quality metric and/or trigger signal 306 may be used to trigger one or more corrective actions to make the decoder more robust to fading events and may be used by one or more signal processing functions implemented by the decoder.

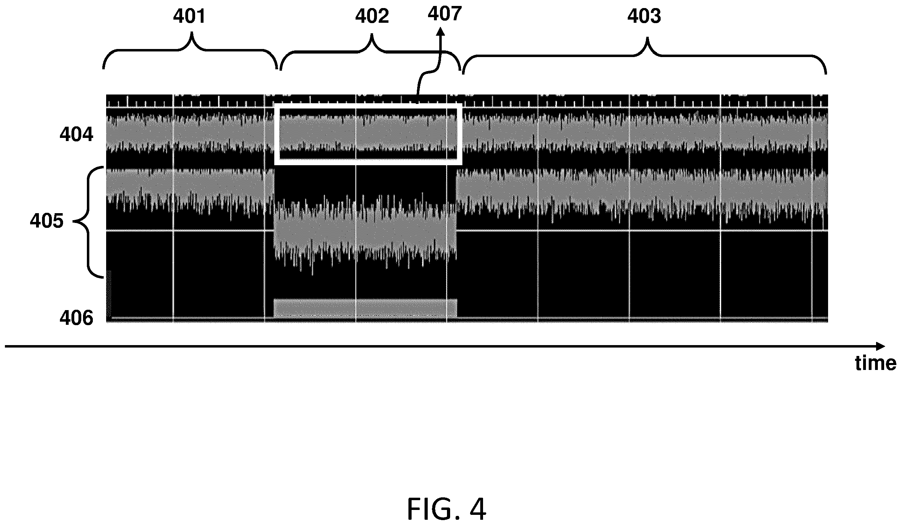

FIG. 4 shows variations over time of several signal: a stream of samples 404, a correlation signal 405 and a trigger signal 406.

These signals illustrate the timing response to a fading event.

In a first time window 401, the samples are not affected by a fading event, the averaged correlation signal 405 is non-zero and the trigger signal 406 is zero.

In a second time window 402, the samples are affected by noise 407 resulting from a fading event, the averaged correlation signal 405 drops to zero and remains equal to zero during all the fading event and the value of the trigger signal 406 indicates the presence of a fading event (e.g., with a value equal to 1).

In a third time window 403 following the second time window 402, the samples are no more affected by the fading event, the averaged correlation signal 405 is again non-zero and the trigger signal 406 is again zero.

This shows that the binary trigger signal indicates in real time the occurrence of the fading event. Real time monitoring of the quality metric is achieved.

When a fading event is detected based on one or more values of the inter-sample correlation indicator, corrective actions may be performed by the decoder to maintain its stability and/or operation ability.

In response to a value of the quality metric falling below a first threshold (this may correspond to a start of fading event), at least one first action may be performed. In response to a value of the quality metric rising above a second threshold (this may correspond to the end of fading event), at least one second action may be performed.

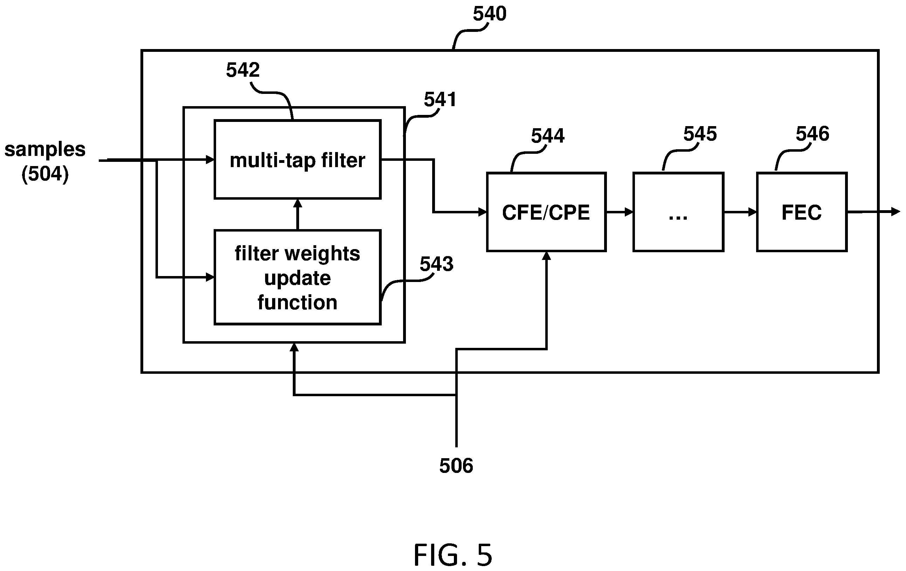

FIG. 5 shows an example processing circuitry 540 (e.g., a DSP 540) adapted to perform one or more corrective actions based on a quality metric and/or trigger signal 506.

In this example, the processing circuitry 540 includes the following functional blocks:
- an auto-adaptive filter 541 (e.g., a CMA filter) adapted to track and align the input polarization state as well as to compensate for the transmission channel characteristics;
- a carrier frequency and phase offset estimation and correction function 544 (CFE / CPE function),
- one or more other processing functions 545 applied after the CFE / CPE function 544, for example a bit-interleaver to dilute in time burst of errors;
- a Forward-Error Correction function (FEC) 546.

In an example embodiment, the auto-adaptive filter 541 includes a multi-tap filter 542 and a filter weights update function 543 adapted to iteratively update the weights of the multi-tap filter 542. A quality metric and/or trigger signal 506 may be used to freeze the real time adaptation of the filter weights when a fading event is detected.

In an example embodiment, a quality metric and/or trigger signal 506 may, in alternative or in combination, be used by the CFE and/or CPE function to freeze the real time adaptation of an averaging function, e.g., by using FIFO that is write-blocked during a fading event.

An objective of the corrective action may be to adapt, during the fading event, one or more of the signal processing functions performed by the decoder to allow the decoder to return to its functional state before the fading event.

As an example, a corrective action may be performed in order to (i) deactivate (e.g., freeze) a function (e.g., the iterative adaptation function of weights of a filter, a write function in a FIFO, etc) used in the decoder 140 by memorizing value(s) of parameter(s) of the function when a fading event occurs, and (ii) reactivate (e.g., resume, restart) the deactivated function once the fading event has ended by using the preserved (e.g., memorized, frozen or unchanged) value(s) of parameter(s). Optionally, updated value(s) of parameter(s) generated by some real time adaptation process may be discarded during the fading event or the real time adaptation process may be paused.

As another example, a corrective action may be performed in order to (i) memorize value(s) of samples(s) used by the function when the fading event occurs, and (ii) restart the function with the preserved (e.g., memorized, frozen or unchanged) samples once the fading event has ended. Optionally, one or more new samples received during a fading event may be discarded during the fading event or the storage of the new samples in memory may be paused.

The Carrier Frequency offset function estimates a phase rotation speed (symbol-to-symbol phase rotation) by measuring the difference in phase position between consecutive demodulated symbols (for example, the 4 possible positions for the symbols put to the power of 4 of a QPSK modulation become a single position, a kind of aliasing occurs). If the same laser would be used for transmitting and receiving, all the demodulated symbols would be received at this single position (i.e., phase). Since actually two distinct lasers are used, the difference in their frequencies causes a rotation of this position (in term of phase). The difference in position from symbol to symbol is measured, averaged over time (typically over about 1000 symbols), which gives an average symbol rotation speed. A reverse rotation is then digitally applied by the CPE function to cancel the rotation of the received symbols.

In the case of a fading event, noise is received instead of symbols. The phase variation estimation of the received data is then completely random. With a fading event, the phase rotation speed estimation can take any value, and when the signal returns after fading, the long averaging induces a convergence time before the correct phase rotation speed value is found..

The quality metric and/or trigger signal may be used to, for example, interrupt taking into account of phase rotation evaluations made during the duration of the fading event so as not to corrupt the phase rotation speed by naturally starting again after fading with the phase rotation values obtained before fading. In embodiments, averaging of the phase rotation may be performed by the CFE function using a FIFO: this FIFO may be write-blocked during a fading event. This means memorizing a phase rotation speed when the quality metric falls below a first threshold and resuming the adaptation of the phase rotation speed with the phase rotation values obtained before fading when the quality metric raises above a second threshold. The second threshold may be equal to the first threshold.

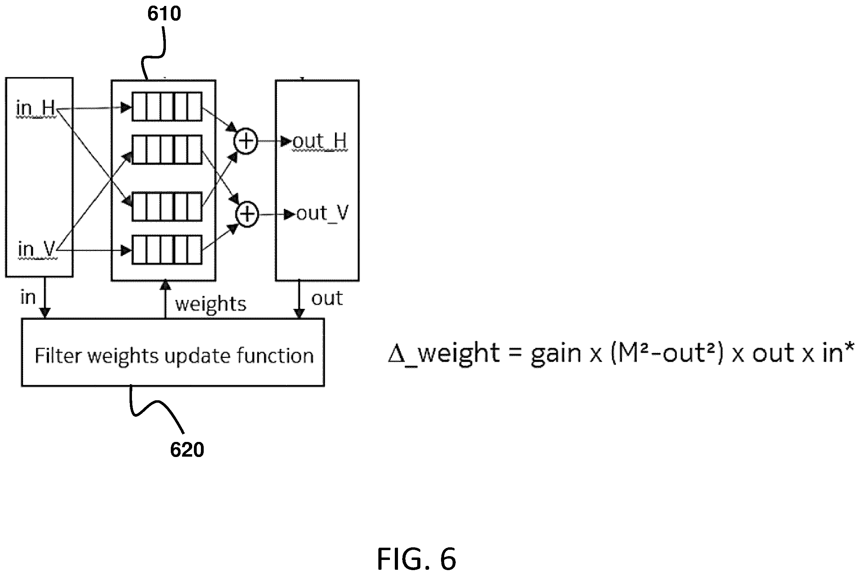

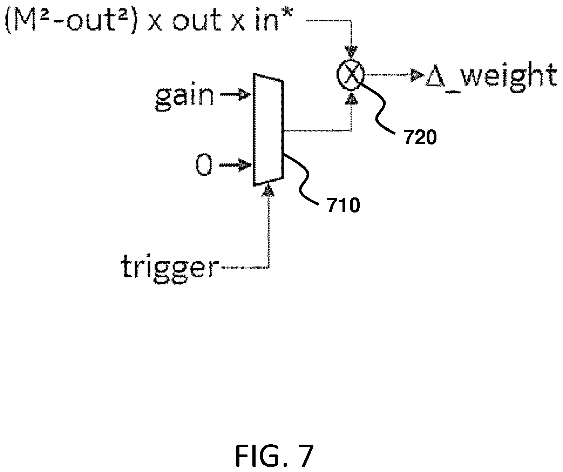

FIGS. 6 and 7 shows an example auto-adaptive filter using a trigger signal to adapt the filter weights as an example of corrective action.

The auto-adaptive filter 541 may be a CMA (Constant Modulus Algorithm) filter. A CMA filter may be used where the transmitted signal suffers from distortion due to linear impairments such as multipath propagation or dispersion. The primary function of a CMA filter is to mitigate the effects of these impairments and improve the quality of the received signal.

A CMA filter is an auto-adaptive filter that is configured to adjust its filter coefficients iteratively based on the characteristics of the received signal and a predefined optimization criterion. Unlike other adaptive filters that aim to minimize mean square error (MSE), the CMA filter optimizes based on the constant modulus criterion. This criterion is particularly suitable for signals with constant envelope modulation schemes, such as Quadrature Amplitude Modulation (QAM). The goal is to ensure that the equalized signal has a constant envelope, which simplifies subsequent detection and demodulation. The filter coefficients may be updated iteratively using an algorithm such as the steepest descent method or its variants. At each iteration, the filter examines the received signal and adjusts its coefficients to minimize the deviation from the constant modulus criterion. The convergence behavior of a CMA filter depends on various factors, including the step size of the adaptation algorithm, the properties of the transmitted signal, and the characteristics of the communication channel. Proper selection of these parameters is crucial to ensure fast convergence and stable operation.

FIG. 6 shows a device including a CMA filter 610 using a butterfly structure to adapted for polarization separation and channel equalization and a filter weights update function 620 adapted for blind update of the weights of the CMA filter 610.

As illustrated by FIG. 6, the CMA filter 610 may be implemented by a set of parallel filters 610 applied to input vectors *in_H* and *in_V* representing the complex vector corresponding to the two polarizations to generate output vectors *out_H* and *out_V* representing the complex vector corresponding to the two polarizations after filtering. The filter weights update function 620 computes a weight update Δ_weight on the basis of a gain. For example, *Δ_weight* = *gain x (M²* - *out²) x out x in*,* where *M* is a constant target for *out_H* and *out_V* constellation radius, and *gain* may be a fixed value that controls the update function speed. In the butterfly structure of filter 610, *in* is either in_H or in_V, and *out* is either out_H or out_V.

FIG. 7 shows a possible adaptation at weight computation level based on a trigger signal.

A simple modification of the filter coefficient updating function consists of the addition of a gain selector 710 controlled by the trigger signal to select a gain value for computing the weight update Δ_weight. The trigger signal allows to either use the fixed gain value to compute the weight update, or to force the gain value to zero when the trigger signal indicates that a fading event is detected. When the gain is forced to zero, the weight update Δ_weight is also forced to zero such that the filter weight update is blocked. This computation logic allows to memorize the values of the weight updates for all filter taps when a fading event starts and to restart from the memorize the values when the fading event ends.

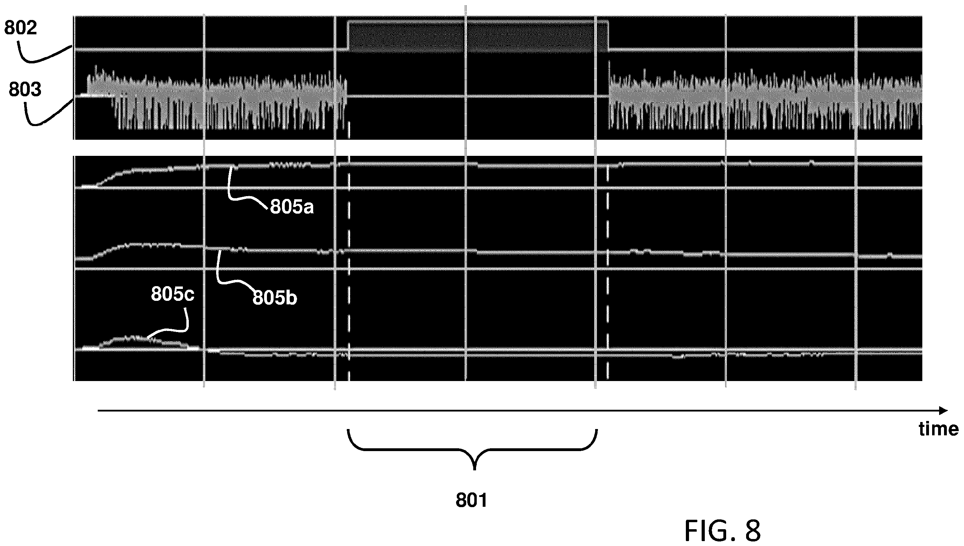

FIG. 8 shows curves as a function of time that illustrate the weight update logic based on the implementation described by reference to FIGS. 6 and 7.

FIG. 8: shows as a function of time:
- a binary trigger signal 802 indicating the presence or absence of a fading event;
- the weight update Δ_weight 803 computed based on the binary trigger signal 802 according to the example described by reference to FIG. 7;
- the filter weight 805a for tap 1;
- the filter weight 805b for tap 0;
- the filter weight 805a for tap -1;

FIG. 8 shows that that, during a fading event corresponding to time window 801, the update of the filter weights is frozen and filter is maintained at its state existing just before this fading event, preventing the filter state from becoming corrupted. As can be seen in FIG. 8, the weight update Δ_weights are equal to zero over the time window 801 while they vary between a minimum and a maximum outside this time window 801. Also each of the filter weights 805a, 805b, 805c remains constant over the time window 801.

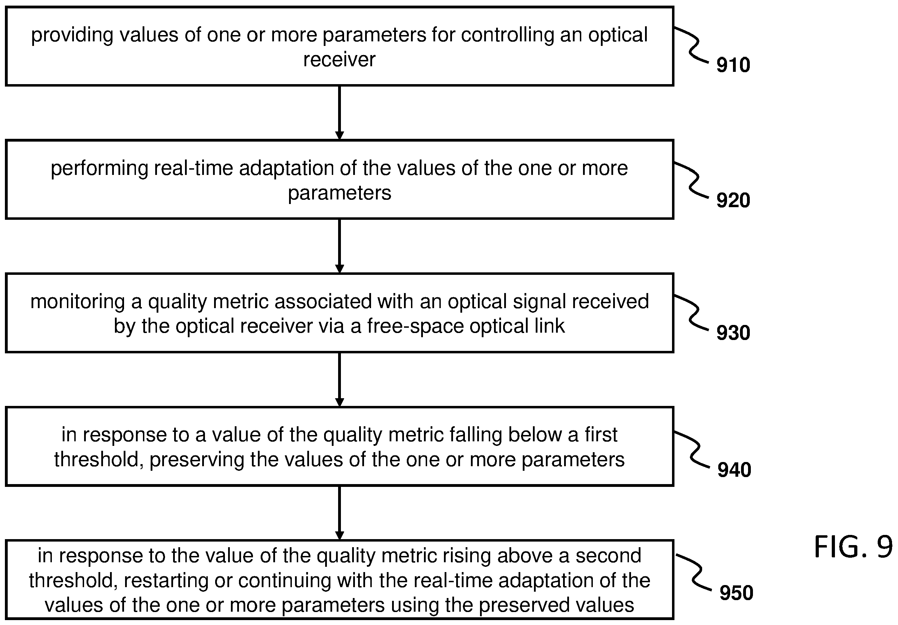

FIG. 9 shows a flowchart of a method for controlling an optical receiver according to one or more example embodiments. The steps of the method may be implemented by processing circuitry connected to or integrated into an optical receiver according to any example described herein.

While the steps may be described herein in a sequential manner, the person skilled in the art will appreciate that some steps may be omitted, combined, performed in different order and / or in parallel.

In step 910, values of one or more parameters are provided for controlling the optical receiver.

In step 920, real-time adaptation of the values of the one or more parameters is performed.

In step 930, a quality metric associated with an optical signal received by the optical receiver via a free-space optical link is monitored.

In step 940, in response to a value of the quality metric falling below a first threshold, the values of the one or more parameters are preserved (e.g., memorized, frozen or unchanged).

In step 950, in response to the value of the quality metric rising above a second threshold, the real-time adaptation of the values of the one or more parameters is restarted (resumed) or continued with using the preserved (e.g., memorized, frozen or unchanged) values.

The embodiment of FIG. 9 may be combined with any other embodiment disclosed for example by reference to FIGS. 1 to 8.

It should be appreciated by those skilled in the art that any functions, engines, block diagrams, flow diagrams, state transition diagrams, flowchart and / or data structures described herein represent conceptual views of illustrative circuitry.

One or more or all operation(s) of a method, process, function, engine, block, or step described herein may be implemented in hardware, software, firmware, middleware, microcode, or any suitable combination thereof.

When implemented in software, firmware, middleware or microcode, instructions to perform the necessary tasks may be stored in a computer-readable medium. A computer-readable medium or computer-readable storage medium may be any tangible storage medium suitable for storing instructions readable by a processor.

The instructions may be transmitted over the computer-readable medium and be loaded onto the computing device. The instructions are configured to cause the computing device to perform the considered operation(s). For example, as mentioned above, at least one memory may include or store instructions, the at least one memory and the instructions may be configured to, with at least one processor, cause the computing device to perform the considered operation(s). The instructions may be configured to cause an apparatus to perform one or more functions disclosed herein for a decoder and/or an optical receiver.

The apparatus may include means for performing the one or more functions disclosed herein for a decoder and/or a noise detector and/or an optical receiver. The apparatus may include an optical receiver as disclosed herein. The means may include at least one processor and at least one memory-storing instructions that, when executed by the at least one processor, cause the apparatus to perform the one or more functions. The means may include circuitry (e.g., processing circuitry) to perform the one or more functions. Additionally, the processor, memory and instructions, serve as means for providing or causing performance by the apparatus of the one or more functions.

In the present description, the wording "means configured to perform one or more functions" or "means for performing one or more functions" may correspond to one or more functional blocks comprising circuitry that is adapted for performing or configured to perform the concerned function(s). The block may perform itself this function or may cooperate and / or communicate with other one or more blocks to perform this function. The "means" may correspond to or be implemented as "one or more modules", "one or more devices", "one or more units", etc.

As used in this application, the term "circuitry" may refer to one or more or all of the following:
(a) hardware-only circuit implementations (such as implementations in only analog and/or digital circuitry) and
(b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and
(c) hardware circuit(s) and or processor(s), such as a microprocessor(s) or a portion of a microprocessor(s), that requires software (e.g., firmware) for operation, but the software may not be present when it is not needed for operation."

This definition of circuitry applies to all uses of this term in this application, including in any claim. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, an integrated circuit for a network element or network node or any other computing device or network device.

The term circuitry may cover digital signal processor (DSP) hardware, network processor, application-specific integrated circuit (ASIC), field programmable gate array (FPGA), etc. The circuitry may be or include, for example, hardware, programmable logic, a programmable processor that executes software or firmware, and/or any combination thereof (e.g., a processor, control unit/entity, controller) to execute instructions or software and control transmission and receptions of signals, and a memory to store data and/or instructions.

The circuitry may also make decisions or determinations, generate frames, packets or messages for transmission, decode received frames or messages for further processing, and other tasks or functions described herein. The circuitry may control transmission of signals or messages over a radio network, and may control the reception of signals or messages, etc., via one or more communication networks.

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

While aspects of the present disclosure have been particularly shown and described with reference to the embodiments above, it will be understood by those skilled in the art that various additional embodiments may be contemplated by the modification of the disclosed machines, systems, and methods without departing from the scope of what is disclosed. Such embodiments should be understood to fall within the scope of the present disclosure as determined based upon the claims and any equivalents thereof.

### LIST OF MAIN ABBREVIATIONS

- ADC: Analogue-to-Digital Converter
- ASIC: Application-Specific Integrated Circuit
- CFE: Carrier Frequency offset Estimation
- CMA: Constant Modulus Algorithm
- CPE: Carrier Phase offset Estimation
- DSP: Digital Signal Processing
- FEC: Forward Error Correction
- FPGA: Field Programmable Gate Array
- PDU: Protocol Data Units
- WDM: Wavelength Division Multiplexed

## Claims

1. An apparatus comprising processing circuitry configured to:
provide values of one or more parameters for controlling an optical receiver;
perform real-time adaptation of the values of the one or more parameters;
monitor a quality metric associated with an optical signal received by the optical receiver via a free-space optical link;
in response to a value of the quality metric falling below a first threshold, preserve the values of the one or more parameters; and
in response to the value of the quality metric rising above a second threshold, restart or continue with the real-time adaptation of the values of the one or more parameters using the preserved values.

2. The apparatus of claim 1, wherein the processing circuitry is further configured to pause the real-time adaptation of the values of the one or more parameters in response to the value of the quality metric falling below the first threshold.

3. The apparatus of claim 2, wherein the second threshold is the same as or is higher than or lower than the first threshold.

4. The apparatus of claim 2 or 3, wherein the processing circuitry is configured to reset the values of the one or more parameters to predefined values when the value of the quality metric has remained below the second threshold over a predetermined period.

5. The apparatus of claim 4, wherein the predetermined period is less than 3 ms, or less than 10 ms, or less than 30 ms, or less than 100 ms.

6. The apparatus of any one of the preceding claims, wherein the apparatus comprises the optical receiver.

7. The apparatus of claim 6, wherein the optical receiver comprises one or more photodetectors, one or more analog-to-digital converters, and a decoder.

8. The apparatus of claim 7,
wherein the one or more photodetectors are configured to generate one or more electrical signals in response to the optical signal,
wherein the one or more analog-to-digital converters are configured to generate one or more digital streams of samples from the one or more electrical signals, and
wherein the decoder is configured to generate one or more streams of data units by decoding the one or more digital streams of samples,
wherein the one or more parameters comprise one or more parameters of the decoder.

9. The apparatus of claim 8, wherein the quality metric is a function of one or more of the following:
a signal-to-noise ratio of the optical signal; and
inter-sample correlations of the one or more digital streams of samples.

10. The apparatus of claim 9,
wherein the inter-sample correlations comprise correlations between two or more consecutive samples.

11. The apparatus of any one of claims 8 to 10, wherein the decoder comprises a filter, and wherein the one or more parameters comprise coefficients of the filter.

12. The apparatus of claim 11, wherein the filter is one of a Constant Modulus Algorithm filter or a Frequency and Carrier Correction filter or a post-equalizer.

13. The apparatus of any one of claims 8 to 12, wherein the one or more digital streams of samples comprise a first, a second, a third and a fourth digital stream of samples, the first, the second, the third and the fourth digital stream of samples representing an in-phase component and a quadrature component of a first and a second polarization component of the optical signal, respectively.

14. A method comprising:
providing values of one or more parameters for controlling an optical receiver;
performing real-time adaptation of the values of the one or more parameters;
monitoring a quality metric associated with an optical signal received by the optical receiver via a free-space optical link;
in response to a value of the quality metric falling below a first threshold, preserving the values of the one or more parameters; and
in response to the value of the quality metric rising above a second threshold, restarting or continuing with the real-time adaptation of the values of the one or more parameters using the preserved values.
